# EUROPEAN PATENT SPECIFICATION

(11) **EP 2 864 409 B1**
(45) Date of publication and mention of the grant of the patent: **11.05.2016**
(21) Application number: 13737034.2
(22) Date of filing: 25.06.2013
(51) Int. Cl.: C08K 5/24, C08L 27/12

(54) **CURABLE FLUOROELASTOMER COMPOSITION**
HÄRTBARE FLUORELASTOMERZUSAMMENSETZUNGEN
COMPOSITION DE FLUOROÉLASTOMÈRES DURCISSABLE

(30) Priority: 25.06.2012 US 201213531713
(43) Date of publication of application: 29.04.2015
(73) Proprietor: E. I. du Pont de Nemours and Company, Wilmington, DE 19898 (US)
(72) Inventor: BISH, Christopher, J., Kennett Square, Pennsylvania 19348 (US); MORKEN, Peter, A., Wilmington, Delaware 19810 (US)
(74) Representative: Morf, Jan Stefan
(86) International application number: PCT/US2013/047467
(87) International publication number: WO 2014/004422

(56) References cited:
- EP-A1- 0 727 413
- US-A- 4 180 405
- US-A- 4 512 909
- US-A- 5 789 509

## Description

### FIELD OF THE INVENTION

This invention relates to curable fluoroelastomer compositions and more particularly to fluoroelastomer compositions containing certain phenol hydrazine complexes as curing agents.

### BACKGROUND OF THE INVENTION

Fluoroelastomers have achieved outstanding commercial success and are used in a wide variety of applications in which severe environments are encountered, in particular those end uses where exposure to high temperatures and aggressive chemicals occurs. For example, these polymers are often used in seals for aircraft engines, in oil-well drilling devices, and in sealing elements for industrial equipment that operates at high temperatures.

The outstanding properties of fluoroelastomers are largely attributable to the stability and inertness of the copolymerized fluorinated monomer units that make up the major portion of the polymer backbones in these compositions. Such monomers include vinylidene fluoride, hexafluoropropylene, tetrafluoroethylene and perfluoro(alkyl vinyl) ethers. In order to develop elastomeric properties fully, fluoroelastomers are typically crosslinked, i.e. vulcanized. To this end, a small percentage of cure site monomer is copolymerized with the fluorinated monomer units. Cure site monomers containing at least one nitrile group, for example perfluoro-8-cyano-5-methyl-3,6-dioxa-1-octene, are especially preferred. Such compositions are described in U.S. Patents 4,281,092; 4,394,489; 5,789,489; 5,789,509 and in WO 2011084404.

Bisamidoximes (U.S. Patent 5,668,221) and bisamidrazones (U.S. Patents 5,605,973; 5,637,648) have been used as vulcanizing agents for fluoroelastomers having nitrile group cure sites. These cures may be scorchy, i.e. crosslinking may begin before the final shaping of the composition. Also, the curatives require complex, multistep syntheses from expensive starting materials.

Other nitrogen containing nucleophilic compounds have been employed to crosslink fluoroelastomers having nitrile group cure sites (U.S. Patent 6,638,999 B2). Some of these curatives are scorchy while others are volatile at rubber milling temperatures.

Fluoropolymers having pendant amidrazone or amidoxime groups are also known (U.S. Patent 7,300,985 B2). These polymers require an additional polymer modification step in order to form crosslinks.

### SUMMARY OF THE INVENTION

The present invention is directed to curable fluoroelastomer compositions which comprise a fluoroelastomer having nitrile group cure sites and certain phenol hydrazine complex as curatives. More specifically, the present invention is directed to a curable composition comprising:
A) a fluoroelastomer comprising copolymerized units of a nitrile group-containing cure site monomer; and
B) a phenol hydrazine complex.

Another aspect of the present invention is a cured article made from the above composition.

### DETAILED DESCRIPTION OF THE INVENTION

The fluoroelastomer that may be employed in the composition of the invention may be partially fluorinated or perfluorinated. Fluoroelastomers preferably contain between 25 and 70 weight percent, based on the total weight of the fluoroelastomer, of copolymerized units of a first monomer which may be vinylidene fluoride (VF₂) or tetrafluoroethylene (TFE). The remaining units in the fluoroelastomers are comprised of one or more additional copolymerized monomers, different from said first monomer, selected from the group consisting of fluoromonomers, hydrocarbon olefins and mixtures thereof. Fluoromonomers include fluorine-containing olefins and fluorine-containing vinyl ethers.

Fluorine-containing olefins which may be employed to make fluoroelastomers include, but are not limited to vinylidene fluoride (VF₂), hexafluoropropylene (HFP), tetrafluoroethylene (TFE), 1,2,3,3,3-pentafluoropropene (1-HPFP), 1,1,3,3,3-pentafluoropropene (2-HPFP), chlorotrifluoroethylene (CTFE) and vinyl fluoride.

Fluorine-containing vinyl ethers that may be employed to make fluoroelastomers include, but are not limited to perfluoro(alkyl vinyl) ethers. Perfluoro(alkyl vinyl) ethers (PAVE) suitable for use as monomers include those of the formula

CF₂=CFO(R_{f'}-O)ₙ(R_{f"}O)ₘR_{f} (I)

where R_{f'} and R_{f"} are different linear or branched perfluoroalkylene groups of 2-6 carbon atoms, m and n are independently 0-10, and R_{f} is a perfluoroalkyl group of 1-6 carbon atoms.

A preferred class of perfluoro(alkyl vinyl) ethers includes compositions of the formula

CF₂=CFO(CF₂CFXO)ₙR_{f} (II)

where X is F or CF₃, n is 0-5, and R_{f} is a perfluoroalkyl group of 1-6 carbon atoms.

A most preferred class of perfluoro(alkyl vinyl) ethers includes those ethers wherein n is 0 or 1 and R_{f} contains 1-3 carbon atoms. Examples of such perfluorinated ethers include perfluoro(methyl vinyl ether) (PMVE), perfluoro(ethyl vinyl ether) (PEVE) and perfluoro(propyl vinyl ether) (PPVE). Other useful monomers include those of the formula

CF₂=CFO[(CF₂)ₘCF₂CFZO]ₙR_{f} (III)

where R_{f} is a perfluoroalkyl group having 1-6 carbon atoms, m = 0 or 1, n = 0-5, and Z = F or CF₃. Preferred members of this class are those in which R_{f} is C₃F₇, m = 0, and n = 1.

Additional perfluoro(alkyl vinyl) ether monomers include compounds of the formula

CF₂=CFO[(CF₂CF{CF₃}O)ₙ(CF₂CF₂CF₂O)ₘ(CF₂)ₚ]CₓF₂ₓ₊₁ (IV)

where m and n independently = 0-10, p = 0-3, and x = 1-5. Preferred members of this class include compounds where n = 0-1, m = 0-1, and x = 1.

Other examples of useful perfluoro(alkyl vinyl ethers) include

CF₂=CFOCF₂CF(CF₃)O(CF₂O)ₘCₙF₂ₙ₊₁ (V)

where n = 1-5, m = 1-3, and where, preferably, n = 1.

If copolymerized units of PAVE are present in fluoroelastomers employed in the invention, the PAVE content generally ranges from 25 to 75 weight percent, based on the total weight of the fluoroelastomer. If perfluoro(methyl vinyl ether) is used, then the fluoroelastomer preferably contains between 30 and 65 wt.% copolymerized PMVE units.

Hydrocarbon olefins useful in the fluoroelastomers employed in the invention include, but are not limited to ethylene and propylene. If copolymerized units of a hydrocarbon olefin are present in the fluoroelastomers, hydrocarbon olefin content is generally 4 to 30 weight percent.

The fluoroelastomer further contains copolymerized units of at least one cure site monomer, generally in amounts of from 0.1-5 mole percent. The range is preferably between 0.3-1.5 mole percent. Although more than one type of cure site monomer may be present, most commonly one cure site monomer is used and it contains at least one nitrile substituent group. Suitable cure site monomers include nitrile-containing fluorinated olefins and nitrile-containing fluorinated vinyl ethers. Useful nitrile-containing cure site monomers include those of the formulas shown below.

CF₂=CF-O(CF₂)ₙ-CN (VI)

where n = 2-12, preferably 2-6;

CF₂=CF-O[CF₂-CFCF₃-O]ₙ-CF₂-CFCF₃-CN (VII)

where n= 0-4, preferably 0-2;

CF₂=CF-[OCF₂CFCF₃]ₓ-O-(CF₂)ₙ-CN (VIII)

where x = 1-2, and n = 1-4; and

CF₂=CF-O-(CF₂)ₙ-O-CF(CF₃)CN (IX)

where n = 2-4.

Those of formula (VIII) are preferred. Especially preferred cure site monomers are perfluorinated polyethers having a nitrile group and a trifluorovinyl ether group. A most preferred cure site monomer is

CF₂=CFOCF₂CF(CF₃)OCF₂CF₂CN (X)

i.e. perfluoro(8-cyano-5-methyl-3,6-dioxa-1-octene) or 8-CNVE.

A first aspect of this invention is a curable composition comprising A) a fluoroelastomer comprising copolymerized units of a nitrile group containing cure site monomer; and B) a phenol hydrazine complex.

The phenol hydrazine complex is a hydrogen bonded complex, rather than a salt. The pKa of the phenol in water is generally between 5 and 13, preferably between 6 and 12 in order to ensure minimal, if any, salt formation with hydrazine. Phenols useful in this invention may have more than one hydroxyl group attached to the aromatic ring. In fact, phenols having 2 or 3 hydroxyl groups are preferred. Other functional groups may optionally be attached to the phenol aromatic ring, e.g. hydrocarbon groups, halogens, nitriles, ethers, aromatic groups, amines, esters, nitro groups, heterocycles or sulfones. Phenol hydrazine complexes may be made by dissolving the phenol in anhydrous methanol or ethanol and then introducing an equivalent amount of hydrazine (U.S. Patent No. 4,180,405). The phenol may optionally be a thiophenol. Hydrazine salts or complexes with phthalhydrazide are not included in the phenol hydrazine complexes of the invention.

Specific examples of phenol hydrazine complexes include, but are not limited to hydrazine cyanurate, hydrazine hydroquinone and the hydrazine complexes disclosed in U.S. Patent No. 4,180,405. Hydrazine cyanurate and hydrazine hydroquinone are preferred.

It is theorized that these phenol hydrazine complexes act as curing agents by causing the dimerization of polymer chain bound nitrile groups to form 1,2,4-triazole rings, thus crosslinking the fluoroelastomer. The phenol hydrazine complexes are less volatile than curatives such as hydrazine or t-butyl carbazate, making the phenol hydrazine complex curatives less likely to be fugitive during mixing and shaping processes.

In order to be useful as either the major, or as the only curative for these fluoroelastomers, the level of phenol hydrazine complex should be about 0.05 to 7 parts phenol hydrazine complex per 100 parts fluoroelastomer, preferably about 0.1 to 3 parts phenol hydrazine complex per 100 parts fluoroelastomer, most preferably about 0.5 to 2 parts phenol hydrazine complex per 100 parts fluoroelastomer. As used herein, "parts" refers to parts by weight, unless otherwise indicated.

An appropriate level of phenol hydrazine complex can be selected by considering cure properties, for example the time to develop maximum moving die rheometer (MDR) torque and minimum Mooney scorch of the curable compositions. The optimum level will depend on the particular combination of fluoroelastomer and phenol hydrazine complex.

Optionally, a curative accelerator, e.g. a compound that releases ammonia at curing temperatures, may be used in combination with a phenol hydrazine complex curative. Examples of compounds that decompose to release ammonia at curing temperatures include those disclosed in U.S. 6,281,296 B1 and U.S. 2011/0009569.

Optionally, another curative commonly employed to crosslink fluoroelastomers having nitrile-group cure sites may be used in addition to the phenol hydrazine complex. Examples of such other curatives include, but are not limited to diaminobisphenol AF, 2,2-bis(3-amino-4-anilinophenyl)hexafluoropropane, mono- or bis-amidines, mono- or bisamidrazones, mono- or bis-amidoximes, or an organic peroxide plus coagent.

Additives, such as carbon black, fluoropolymer micropowders, stabilizers, plasticizers, lubricants, fillers, and processing aids typically utilized in fluoroelastomer compounding can be incorporated into the compositions of the present invention, provided they have adequate stability for the intended service conditions.

The curable compositions of the invention may be prepared by mixing the fluoroelastomer, phenol hydrazine complex and other components using standard rubber compounding procedures. For example, the components may be mixed on a two roll rubber mill, in an internal mixer (e.g. a Banbury® internal mixer), or in an extruder. The curable compositions may then be crosslinked (i.e. cured) by application of heat and/or pressure. When compression molding is utilized, a press cure cycle is generally followed by a post cure cycle during which the press cured composition is heated at elevated temperatures in excess of 300°C for several hours.

The curable compositions of the present invention are useful in production of gaskets, tubing, and seals. Such cured articles are generally produced by molding a compounded formulation of the curable composition with various additives under pressure, curing the part, and then subjecting it to a post cure cycle. The cured compositions have excellent thermal stability, steam and chemical resistance. Volume swell (ASTM D1414) after exposure to 225°C water for at least 168 hours, preferably at least 336 hours, is less than 5%. Also compression set, 300°C, 70 hours, 15% compression (ASTM D395) is less than 70%. The cured compositions are particularly useful in applications such as seals and gaskets for manufacturing semiconductor devices, and in seals for high temperature automotive uses.

Other fluoropolymers containing nitrile cure sites, such as fluoroplastics may be substituted for fluoroelastomers in the compositions of the invention.

The invention is now illustrated by certain embodiments wherein all parts are by weight unless otherwise specified.

### EXAMPLES

### TEST METHODS

### Cure Characteristics

Cure characteristics were measured using a Monsanto MDR 2000 instrument under the following conditions:
Moving die frequency: 1.66 Hz
Oscillation amplitude: ± 0.5 degrees
Temperature: 190°C, unless otherwise noted
Sample size: Disks having diameter of 1.5 inches (38 mm) Duration of test: 30 minutes

The following cure parameters were recorded:
M_{H}: maximum torque level, in units of dN·m
M_{L}: minimum torque level, in units of dN·m
Tc90: time to 90% of maximum torque, minutes

Test specimens were prepared from elastomer compounded with appropriate additives, as described in the formulations listed in the Examples below. Compounding was carried out on a rubber mill. The milled composition was formed into a sheet and a 10 g sample was die cut into a disk to form the test specimen.

Compression set of O-ring samples was determined in accordance with ASTM D395. Mean values are reported.

Volume swell in water was measured at 225°C for the time indicated in the Tables in accordance with ASTM D1414.

The following fluoroelastomer polymer was used in the Examples: FFKM - A terpolymer containing 61.8 mole percent units of TFE, 37.4 mole percent units of PMVE and 0.80 mole percent units of 8-CNVE was prepared according to the general process described in U.S. Patent No. 5,789,489.

### Examples 1-2

Curable compositions of the invention were compounded on a two-roll rubber mill in the proportions shown in Table I. The compounded compositions are labeled Example 1 (hydrazine cyanurate, available from Aldrich) and Example 2 (hydroquinone-hydrazine complex, prepared according to the general procedure from F. Toda et. al. J. Chem. Soc. Chem. Commun. 1995 p.1531) in Table I. Cure characteristics of the compounded compositions are also shown in Table I. O-rings were made by press curing the curable compositions at a temperature of 190°C for Tc90 plus 5 minutes, followed by a post cure in a nitrogen atmosphere at a temperature of 305°C for 26 hours after a slow temperature ramp up from room temperature. Compression set and volume swell values are also shown in Table I.

In order to compare volume swells of the compositions of the invention with a prior art composition, o-rings were made from a similar compound, but containing 0.25 phr urea as curative, rather than a phenol hydrazine complex. After only 168 hours of exposure to 225°C water, the urea cured o-rings exhibited a 15.7 % volume swell.

**TABLE I**

| Formulation (phr¹) | **Example 1** | **Example 2** |
|---|---|---|
| FFKM | 100 | 100 |
| Carbon Black MT N990 | 30 | 30 |
| hydrazine cyanurate | 1.22 | |
| hydroquinone-hydrazine complex | | 1.46 |
| Cure Characteristics | | |
| M_{L} (dN·m) | 3.61 | 2.78 |
| M_{H} (dN·m) | 18.0 | 13.9 |
| Tc90, minutes | 17.2 | 4.86 |
| Compression set, 300°C, 70 hours, 15% compression, % | 29 | 33 |
| Volume swell, 168 hours, % | -0.1 | 0.6 |

| | | |
|---|---|---|
| ¹Parts by weight per hundred parts by weight fluoroelastomer | | |

## Claims

1. A curable composition comprising:
A) a fluoroelastomer comprising copolymerized units of a nitrile group-containing cure site monomer; and
B) a phenol hydrazine complex.

2. A curable composition of claim 1 wherein said phenol hydrazine complex is selected from the group consisting of hydrazine cyanurate and hydrazine hydroquinone.

3. A curable composition of claim 2 wherein said phenol hydrazine complex is hydrazine cyanurate.

4. A curable composition of claim 2 wherein said phenol hydrazine complex is hydrazine hydroquinone.

5. A curable composition of claim 1 wherein said phenol is a thiophenol.

6. A curable composition of claim 1 further comprising a curative accelerator.

7. A curable composition of claim 1 further comprising a curative in addition to said phenol hydrazine complex.

8. A cured article made from the composition of claim 1.

9. A cured article of claim 8 having a volume swell, measured according to ASTM D1414, after exposure to 225°C water for at least 168 hours of less than 5% and a compression set, 300°C, 70 hours, 15% compression, measured according to ASTM D395, of less than 70%.

## Patentansprüche

1. Aushärtbare Zusammensetzung umfassend:
A) ein Fluorelastomer umfassend copolymerisierte Einheiten eines Nitrilgruppenhaltigen Aushärtungsortmonomers; und
B) einen Phenolhydrazin-Komplex.

2. Aushärtbare Zusammensetzung nach Anspruch 1, wobei der Phenolhydrazin-Komplex aus der Gruppe ausgewählt ist bestehend aus Hydrazincyanurat und Hydrazinhydrochinon.

3. Aushärtbare Zusammensetzung nach Anspruch 2, wobei der Phenolhydrazin-Komplex Hydrazincyanurat ist.

4. Aushärtbare Zusammensetzung nach Anspruch 2, wobei der Phenolhydrazin-Komplex Hydrazinhydrochinon ist.

5. Aushärtbare Zusammensetzung nach Anspruch 1, wobei das Phenol ein Thiophenol ist.

6. Aushärtbare Zusammensetzung nach Anspruch 1, ferner einen Aushärtungsbeschleuniger umfassend.

7. Aushärtbare Zusammensetzung nach Anspruch 1, ferner ein Aushärtungsmittel zusätzlich zum Phenolhydrazin-Komplex umfassend.

8. Ausgehärteter Artikel, der aus der Zusammensetzung nach Anspruch 1 hergestellt ist.

9. Ausgehärteter Artikel nach Anspruch 8, der eine Volumenschwellung, ASTM D 1414 entsprechend gemessen, nach mindestens 168 Stunden langem Aussetzen Wasser von 225 °C gegenüber, von weniger als 5 % und einen Druckverformungsrest nach 70 Stunden bei 300 °C, 15 % Komprimierung, ASTM D395 entsprechend gemessen, von weniger als 70 % aufweist.

## Revendications

1. Composition durcissable comprenant :
A) un élastomère fluoré comprenant des motifs copolymérisés d'un monomère à site de durcissement contenant un groupe nitrile; et
B) un complexe de phénol hydrazine.

2. Composition durcissable selon la revendication 1, dans laquelle ledit complexe de phénol hydrazine est sélectionné dans le groupe constitué du cyanurate d'hydrazine et de l'hydroquinone d'hydrazine.

3. Composition durcissable selon la revendication 2, dans laquelle ledit complexe de phénol hydrazine est le cyanurate d'hydrazine.

4. Composition durcissable selon la revendication 2, dans laquelle ledit complexe de phénol hydrazine est l'hydroquinone d'hydrazine.

5. Composition durcissable selon la revendication 1, dans laquelle ledit phénol est un thiophénol.

6. Composition durcissable selon la revendication 1, comprenant en outre un accélérateur de durcissement.

7. Composition durcissable selon la revendication 1, comprenant en outre un durcisseur en plus dudit complexe de phénol hydrazine.

8. Article durci fabriqué à partir de la composition selon la revendication 1.

9. Article durci selon la revendication 8 ayant un gonflement de volume, mesuré selon la norme ASTM D1414, après exposition à de l'eau à 225°C durant au moins 168 heures, de moins de 5 % et une compression rémanante à 300°C, durant 70 heures, à 15% de compression, mesurée selon la norme ASTM D395, de moins de 70%.
